# FASCICULE DE BREVET EUROPEEN

(11) **EP 2 659 419 B1**
(45) Date de publication et mention de la délivrance du brevet: **15.03.2017**
(21) Numéro de dépôt: 11815546.4
(22) Date de dépôt: 26.12.2011
(51) Int. Cl.: G06F 21/83, G06F 21/44

(54) **PROCÉDÉ ET DISPOSITIF DE CONTRÔLE D'ACCÈS À UN SYSTÈME INFORMATIQUE**
VERFAHREN UND VORRICHTUNG ZUR STEUERUNG DES ZUGRIFFS AUF EIN COMPUTERSYSTEM
METHOD AND DEVICE FOR CONTROLLING ACCESS TO A COMPUTER SYSTEM

(30) Priorité: 27.12.2010 FR 1061285
(43) Date de publication de la demande: 06.11.2013
(73) Titulaire: Electricité de France, 75008 Paris (FR); Seclab, 34000 Montpellier (FR)
(72) Inventeur: SITBON, Pascal, F-92320 Chatillon (FR); TARRAGO, Arnaud, F-75014 Paris (FR); NGUYEN, Pierre, F-92120 Montrouge (FR)
(74) Mandataire: Cabinet Plasseraud
(86) Numéro de dépôt international: PCT/FR2011/053197
(87) Numéro de publication internationale: WO 2012/089983

(56) Documents cités:
- DE-A1-102005 008 966
- KR-A- 20070 017 609
- KR-K1- 20070 017 609
- US-A1- 2003 056 051
- US-A1- 2006 037 084

## Description

L'invention concerne le domaine de l'accès sécurisé à des systèmes informatiques, et notamment celui du contrôle de l'accès à ces systèmes informatiques au moyen de périphériques particuliers.

Les systèmes informatiques existants présentent un certain nombre de ports permettant la connexion de différents types de périphériques servant aussi bien à l'interface avec les utilisateurs, à la connexion vers d'autres systèmes informatiques qu'au stockage de données.

Ces systèmes informatiques peuvent ainsi être atteints dans leur intégrité par le branchement physique de certains périphériques hébergeant des données malveillantes, y compris à l'insu de l'utilisateur sur les ports de ces systèmes.

Ceci peut être notamment le cas avec les périphériques USB (pour Universal Serial Bus en anglais). En effet, les ports USB sont des ports universels de type « multifonctions » dans le sens où ils peuvent accepter toute une palette de périphériques de types différents, comme par exemple des interfaces réseau, des éléments de stockage de type clé USB, des claviers, des souris, des webcam, etc.

Ce caractère universel des ces ports, avantageux du point de vue de la flexibilité en termes de branchement et de fonctions supportées offerte par une telle interface, se révèle problématique dans un environnement où la sécurité devient un facteur essentiel, car il permet la connexion de périphériques hébergeant des données malveillantes sur les ports USB de systèmes informatiques sensibles dont l'accès devrait être protégé.

Un utilisateur malveillant (resp. négligeant), utilisant un tel périphérique hébergeant par exemple des données non souhaitables, peut ainsi prendre (resp. perdre) le contrôle, installer des virus ou enregistrer des données confidentielles d'un système informatique sensible, grâce à la seule présence de ports USB sur ce système auxquels il peut connecter un tel type de périphériques.

Il n'est pas possible de bannir purement et simplement l'utilisation de ces ports universels dans la mesure où ces ports sont nécessaires à l'utilisation de certains périphériques essentiels, comme par exemple les souris ou les claviers.

Pour répondre à ce problème, des solutions logicielles ont été proposées dans lesquelles certains types de périphériques ont accès à certaines fonctions, l'accès aux fonctions étant géré de façon purement logicielle. Ainsi, la demande US 2006/0037084 divulgue un système de contrôle d'accès de différents ports USB à un certain nombre de fonctionnalités, sélectionnées et configurables dynamiquement au moyen d'un système d'exploitation utilisant des informations mémorisées de configuration.

Le document KR 2007 0017609 A divulgue un dispositif de contrôle d'accès interposé entre le port USB d'un système informatique et un périphérique USB. Un contrôleur de sécurité autorise l'accès au système informatique en obtenant les identifiants du fabricant, du produit et de la classe d'interface (catégorie) du périphérique, et en les comparant avec une liste d'objets autorisés et/ou interdits stockée de façon permanente dans une mémoire flash. Ladite mémoire ne peut être modifiée que par un gérant de sécurité.

Ces solutions logicielles présentent cependant le désavantage d'être complexes à gérer et contournables via des vulnérabilités liées au système d'exploitation employé et à la manière dont il gère ces périphériques, ou à la manière dont est administré le système informatique. L'utilisateur d'un périphérique hébergeant des données malveillantes, en prenant le contrôle d'un tel système d'exploitation, peut alors reconfigurer les fonctions accessibles aux ports USB et accéder au système informatique avec ce périphérique ou alors diffuser le contenu malveillant sur le système informatique ou par l'intermédiaire des droits d'administration de ce système.

La présente invention a pour objet de remédier aux inconvénients précités.

Elle a pour objet de proposer un contrôle d'accès à des systèmes informatiques, par le biais de ports universels, qui ne puisse pas être détourné par l'intermédiaire d'un utilisateur malveillant ou négligeant, et qui soit simple à gérer.

Elle propose à cet effet un dispositif de contrôle d'accès à un système informatique, le dispositif comprenant au moins un port multifonctions apte à être connecté à différentes catégories de périphériques et une interface d'accès apte à être connectée au système informatique, le dispositif étant caractérisé en ce qu'il comprend des moyens de gestion d'accès connectés entre le port multifonctions et l'interface, les moyens de gestion d'accès étant configurés physiquement pour autoriser l'accès de l'interface au moyen d'un périphérique connecté au port multifonctions seulement si ledit périphérique appartient à une catégorie de périphériques associée spécifiquement et de façon permanente au port multifonctions auquel il est connecté.

Selon un mode de réalisation où ce dispositif comprend un premier et un deuxième ports multifonctions, les moyens de gestion d'accès sont configurés physiquement pour autoriser l'accès de l'interface au moyen d'un périphérique connecté au premier port multifonctions seulement si ce périphérique appartient à une première catégorie de périphériques associée spécifiquement et de façon permanente au premier port multifonctions et pour autoriser l'accès de l'interface au moyen d'un périphérique connecté au deuxième port multifonctions seulement si ce périphérique appartient à une deuxième catégorie de périphériques associée spécifiquement et de façon permanente au deuxième port multifonctions et distincte de la première catégorie de périphériques.

Selon un mode de réalisation où comprend en outre un troisième port multifonctions, les moyens de gestion d'accès sont configurés physiquement pour autoriser l'accès de l'interface au moyen d'un périphérique connecté au troisième port multifonctions seulement si ce périphérique appartient à une troisième catégorie de périphériques associée spécifiquement et de façon permanente au troisième port multifonctions et distincte des première et deuxième catégories de périphériques.

Dans un mode particulier de réalisation, les moyens de gestion d'accès comprennent un premier module d'accès, un deuxième module d'accès et un troisième module d'accès connectés respectivement au premier port multifonctions, au deuxième port multifonctions et au troisième port multifonctions, et l'interface d'accès comprend un module hub connecté auxdits premier, deuxième et troisième module d'accès.

Avantageusement, les moyens de gestion d'accès comprennent un module d'identification configuré pour identifier la catégorie dudit périphérique et pour connecter l'interface au port multifonctions auquel est connecté le périphérique seulement si la catégorie identifiée du périphérique correspond à la catégorie de périphériques associée spécifiquement et de façon permanente audit port multifonctions.

Selon un mode de réalisation, les moyens de gestion d'accès comprennent des moyens de mémorisation afin de mémoriser la catégorie de périphériques associée spécifiquement et de façon permanente audit port multifonctions. Par exemple, les moyens de mémorisation peuvent être de type mémoire morte. De la sorte, l'association entre un port multifonctions et une catégorie de périphériques (mémorisée dans la mémoire morte) pour lesquels l'accès est autorisé, est avantageusement permanente.

Dans une réalisation, les moyens de gestion d'accès sont des circuits programmables une unique fois tels que par exemple des circuits de type FPGA (pour « Field-Programmable Gate Array »), lesquels circuits programmables sont configurés pour ne plus être modifiés après leur programmation. Ainsi, avantageusement, les circuits programmables ne sont pas modifiables par des tiers ou autres programmes malveillants.

Dans un mode de réalisation avantageux, les moyens de gestion d'accès comprennent en outre un module de vérification, connecté entre les moyens de gestion d'accès et l'interface, configuré pour effectuer une vérification sur les données transmises entre le port multifonctions et l'interface.

En particulier, la première, la deuxième et/ou la troisième catégorie de périphériques correspondent à une catégorie de périphériques parmi les claviers, les souris et les clés de stockage.

Dans un mode particulier de réalisation, le port multifonctions est un port universel de type USB.

L'invention propose en outre un procédé de contrôle d'accès d'un périphérique à un système informatique par l'intermédiaire d'un dispositif de contrôle d'accès comprenant un port multifonctions auquel est connecté le périphérique et une interface à laquelle est connectée le système informatique, ce procédé comprenant l'autorisation d'accès, pour le périphérique, à l'interface connectée au système informatique seulement si ledit périphérique appartient à une catégorie de périphériques associée spécifiquement et de façon permanente au port multifonctions auquel ledit périphérique est connecté.

Avantageusement, ce procédé comprend une étape d'identification de la catégorie dudit périphérique par le dispositif, l'accès à l'interface étant autorisé seulement si la catégorie identifiée du périphérique correspond à la catégorie de périphériques spécifiquement associée au port multifonctions auquel le périphérique est connecté.

De façon avantageuse, ce procédé comprend une étape de vérification des données transmises, après l'autorisation d'accès, entre le port multifonctions auquel le périphérique est connecté et l'interface du dispositif connectée au système informatique.

Selon un mode de réalisation avantageux, le procédé comprend une étape préalable d'association physique permanente d'une catégorie spécifique de périphériques respectivement à chacun desdits au moins un port multifonctions du dispositif, ces catégories spécifiques de périphériques étant distinctes les unes des autres.

La présente invention propose également un programme d'ordinateur comportant des instructions de code pour la mise en oeuvre du procédé de contrôle d'accès ci-avant, lorsque ce programme est exécuté par le processeur d'un dispositif de contrôle d'accès connectant un périphérique à un système informatique. Un tel programme doit être considéré comme un produit dans le cadre de la protection qui est recherchée par la présente demande de brevet.

D'autres caractéristiques et avantages de l'invention apparaîtront à l'examen de la description détaillée ci-après, et des dessins annexés sur lesquels :
- la figure 1 est un schéma synoptique illustrant un dispositif de contrôle d'accès selon la présente invention;
- les figures 2A à 2C illustrent trois modes de réalisation particuliers du dispositif de contrôle d'accès de la figure 1 ; et
- la figure 3 illustre les étapes d'un procédé d'accès contrôlé à un système informatique selon la présente invention.

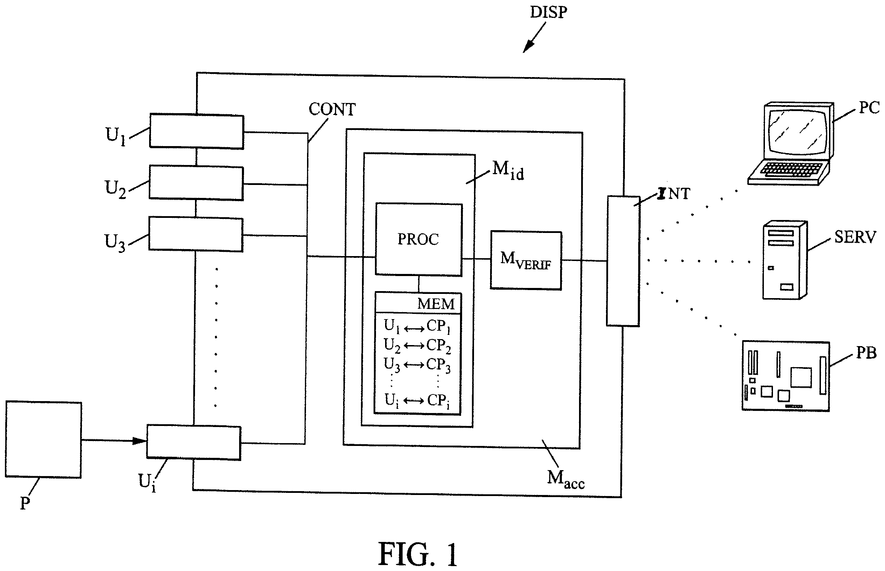

On se réfère tout d'abord à la **figure 1** sur laquelle est illustré un dispositif de contrôle d'accès selon la présente invention.

Ce dispositif de contrôle d'accès DISP comprend un certain nombre de ports multifonctions U₁,U₂,U₃,...,Uᵢ, permettant la connexion d'un périphérique P.

Un seul et unique port multifonction U₁ peut être employé dans ce dispositif DISP, mais l'invention est plus particulièrement avantageuse quand une pluralité de ports multifonctions sont employés, comme cela sera expliqué ci-après.

On désigne ici par le terme de « port multifonctions » tout port universel permettant la connexion de périphériques appartenant à différentes catégories de périphériques, en opposition à un « port monofonction » dédié à un seul et unique type de périphérique comme c'est le cas par exemple avec les ports PS/2 (usage limité à la connexion de périphériques utilisateurs de type souris ou clavier), les ports IEEE 1394 ou les ports Ethernet (usage limité à la connexion d'équipements réseau), les ports VGA (usage limité à la connexion d'écrans), etc...

A titre d'exemple, on peut citer ici les ports USB comme port multifonctions, dans la mesure où de tels ports USB peuvent permettre la connexion de périphériques appartenant à des catégories aussi diverses que les souris, les claviers, les unités de stockage, les modems, les interfaces réseaux, les webcams, etc.

Le dispositif de contrôle d'accès DISP comprend également une interface d'accès INT permettant la connexion du dispositif DISP à un système informatique.

On entend ici par le terme de « système informatique » tout système ou dispositif capable de traiter informatiquement des données, que ce soit un ordinateur personnel PC, un serveur SERV, ou une carte-mère PB, comme illustré.

Dans les deux premiers cas, le dispositif DISP peut prendre la forme d'un boitier externe pouvant être connecté entre le périphérique P et l'ordinateur PC ou le serveur SERV, au moyen d'une interface classique. Dans le dernier cas, l'interface INT peut être de type PCI et le dispositif DISP peut prendre la forme d'une carte interne pouvant être connectée une carte-mère PB située à l'intérieur d'un boîtier d'ordinateur.

Le dispositif DISP comprend en outre des moyens de gestion d'accès M_{acc}, connectés entre les ports multifonctions U₁,U₂,U₃,...,Uᵢ, par le biais d'un contrôleur CONT, et l'interface d'accès INT. Ces moyens de gestion d'accès M_{acc} sont configurés physiquement pour autoriser l'accès de l'interface d'accès INT au moyen du périphérique P, quand ce périphérique P est connecté au port multifonctions Uᵢ, seulement si ce périphérique P appartient à une catégorie de périphériques associée spécifiquement et de façon permanente au port multifonctions.

Pour ce faire, les moyens de gestion d'accès M_{acc} associe respectivement à chacun des ports multifonctions U₁,U₂,U₃,...,Uᵢ une seule et unique catégorie CPᵢ de périphériques. Cette association, spécifique à chaque ports multifonctions, est effectuée de manière permanente et non-modifiable, de façon physique, lors de la conception physique des moyens de gestion d'accès, afin d'empêcher un utilisateur malveillant de modifier cette association spécifique.

Ainsi, à chaque port multifonctions U₁,U₂,U₃,...,Uᵢ est associé une seule et unique catégorie CPᵢ de périphériques. Une telle catégorie CPᵢ de périphériques peut être choisie parmi les catégories distinctes suivantes, dont la liste ci-dessous n'est pas exhaustive :
- claviers d'ordinateurs ;
- souris d'ordinateurs ;
- périphérique de stockage USB ;
- imprimantes ;
- lecteur de carte à puce ;
- périphériques audio ;
- périphériques image ;
- périphériques vidéo ;

Une telle association permanente de catégorie de périphériques spécifiques à chaque ports multifonctions U₁,U₂,U₃,...,Uᵢ, peut être effectuée en réalisant les moyens de gestion d'accès M_{acc} sous forme d'un circuit programmable, par exemple de type FPGA, qui ne peut plus être modifié après programmation de ce circuit et qui évite d'avoir à recourir à un logiciel pour contrôler l'accès à l'interface INT. Ainsi, quelque soit le niveau de sécurité du système informatique auquel le dispositif DISP sert d'intermédiaire pour la connexion d'un périphérique P, ce dispositif DISP assure un niveau de sécurité autonome et préventif.

Ces moyens de gestion d'accès M_{acc} peuvent se présenter sous la forme d'un unique module gérant l'accès de tous les ports multifonctions à l'interface INT, ou bien sous la forme de plusieurs modules dédiés à la gestion d'accès spécifique de certains des ports multifonctions à l'interface INT, par exemple un module dédié à la gestion de l'accès de périphériques de stockage à l'interface INT et un module dédié à la gestion de l'accès de périphériques type souris ou clavier à l'interface INT.

Ainsi, dans un mode de réalisation où le dispositif DISP comprend un premier port multifonctions U₁ et un deuxième port multifonctions U₂, ses moyens de gestion d'accès M_{acc} sont configurés physiquement pour autoriser l'accès de l'interface INT au moyen du périphérique P, lorsqu'il est connecté au premier port multifonctions U₁, seulement si ce périphérique P appartient à une première catégorie CP₁ de périphériques associée spécifiquement et de façon permanente au premier port multifonctions U₁.

Dans ce mode de réalisation, les moyens de gestion d'accès M_{acc} du dispositif DISP sont configurés en outre pour autoriser l'accès de l'interface INT au moyen du périphérique P, lorsqu'il est connecté au deuxième port multifonctions U₂, seulement si ce périphérique P appartient à une deuxième catégorie CP₂ de périphériques associée spécifiquement et de façon permanente au deuxième port multifonctions U₂ et distincte de la première catégorie CP₁ de périphériques.

Dans un autre mode de réalisation où, outre les premier et deuxième ports multifonctions U₁ et U₂, associés respectivement aux catégories CP₁ et CP₂ de périphériques, le dispositif DISP comprend un troisième port multifonctions U₃, les moyens de gestion d'accès M_{acc} sont configurés physiquement pour autoriser l'accès de l'interface INT au moyen du périphérique P, lorsqu'il est connecté au troisième port multifonctions U₃, seulement si ce périphérique P appartient à une troisième catégorie CP₃ de périphériques associée spécifiquement et de façon permanente au troisième port multifonctions U₃ et distincte des première et deuxième catégories de périphériques CP₁ et CP₂.

Dans un mode de réalisation avantageux, les moyens de gestion d'accès M_{acc} comprennent un module d'identification M_{id}.

Ce module d'identification M_{id} est configuré, d'une part, pour identifier la catégorie CP de périphérique à laquelle appartient le périphérique P lorsqu'il se connecte au port multifonctions Uᵢ.

Ainsi, dans le cas illustratif de ports multifonctions de type USB, une donnée d'identification de la catégorie de périphérique est transmise sur un contrôleur USB, sous la forme de deux nombres hexadécimaux, lors de la connexion du périphérique à un port USB.

Une telle donnée d'identification se retrouve notamment définie dans le champ « bDeviceClass », autrement dit sous la forme d'un code de classe prédéfini dans le norme USB, présent dans les « descripteurs d'appareils » également définis selon la norme USB.

Cependant, comme l'identification d'un périphérique n'est pas toujours systématiquement effectuée avec un champ statique, il est également possible d'observer plusieurs échanges entre le périphérique P et le système informatique hôte PC ou SERV, avant de déterminer la catégorie CP du périphérique P. Le dispositif DISP étant situé physiquement entre le périphérique P et le système informatique hôte, ce dispositif dispose de toute la latitude pour déterminer avec précision la catégorie CP du périphérique P. Ce dispositif peut, suivant la catégorie et les échanges observés, décider de faire passer les échanges sans les modifier, de les filtrer et/ou modifier (par exemple restriction des commandes, des données sur la taille, le contenu, etc.) ou de rendre inopérant le périphérique. Dans ce dernier cas, le périphérique sera vu comme déconnecté par le système informatique hôte.

A titre d'exemple, les champs « bDeviceClass » suivants, utilisés dans la norme USB, sont indiqués à titre purement illustratif dans le tableau 1 ci-dessous :

**Tableau 1 : liste des catégories de périphériques associées à des codes de classe « bDeviceClass » prédéfini dans la norme USB**

| **Valeur du champ « bDeviceClass »** | **Type de périphérique désigné par le code de classe** |
|---|---|
| 00 | Chaque interface précise son propre code de classe |
| 01 | Périphérique audio |
| 02 | Périphérique de contrôle et de communications |
| 03 | Interface homme-machine (HID) |
| 05 | Périphérique physique |
| 06 | Périphérique d'image |
| 07 | Périphérique d'impression |
| 08 | Périphérique de stockage de masse |
| 09 | Hub |
| 0E | Périphérique vidéo |
| E0 | Contrôleur sans-fil |
| FF | Code de classe précisé par le vendeur |

Ainsi, dans le cas où les ports multifonctions sont des ports universels de type USB et où le contrôleur CONT est un contrôleur USB, le module d'identification M_{id} peut identifier la catégorie CP d'un périphérique P connecté au port multifonctions Uᵢ en interceptant les données dites de « description d'appareil » échangées sur le contrôleur USB lors de la connexion de ce périphérique P.

Le module d'identification M_{id} peut alors, via l'extraction de ces données de « description d'appareil » (code de classe du périphérique P indiqué sous le champ « bDeviceClass », et d'autres champs comme le subClass et l'interfaceClass, etc.) et via l'observation des échanges entre le périphérique P et l'interface INT, en déduire de ce code de classe la catégorie CP de ce périphérique P.

Ce module d'identification M_{id} est d'autre part configuré pour connecter l'interface INT à ce port multifonctions Uᵢ seulement si la catégorie CP identifiée du périphérique correspond à la catégorie de périphériques CPᵢ associée spécifiquement et de façon permanente à ce port multifonctions Uᵢ.

Le transfert de données entre le périphérique P et un système informatique connecté à l'interface INT ne pourra alors avoir lieu que si le périphérique P est bien du type prévu spécifiquement pour être connecté au port multifonctions Uᵢ.

Il est également envisageable de modifier le type de périphérique à la volée, afin de cacher la vraie nature au système informatique hôte.

Par exemple, lorsque l'utilisateur connecte un clavier « multi-fonctions » avec des touches programmables au dispositif DISP, ce dispositif DISP peut n'annoncer au système informatique qu'un clavier normal 105 touches, lequel fait appel au pilote par défaut du système informatique. Dans ce cas, seules les touches classiques du clavier « multifonctions » seront visibles par le système informatique.

En plus de cette restriction du type, le dispositif DISP peut alors valider, modifier, ou supprimer, à la volée certaines actions lors des échanges entre le périphérique et système informatique hôte. Par exemple, il est possible d'interdire (physiquement) toute demande d'écriture vers un périphérique de stockage.

Afin de mettre en oeuvre ces deux fonctionnalités d'identification et de connexion, le module d'identification M_{id} peut être implémenté physiquement sous la forme d'un processeur PROC connecté, d'une part, au contrôleur CONT afin de recevoir des données émises lors de la connexion du périphérique P au port multifonctions Uᵢ et, d'autre part, à des moyens de mémorisation MEM de type mémoire morte dans lequel sont mémorisées de façon permanente, pour chaque port multifonctions U₁,...,Uᵢ du dispositif DISP, la catégorie de périphériques CP₁,...,CPᵢ spécifiquement associée respectivement au port multifonctions U₁,...,Uᵢ.

Le processeur PROC du module d'identification M_{id} utilise alors les données reçues du contrôleur CONT pour retrouver dans les moyens de mémorisation MEM la catégorie de périphériques CPᵢ spécifiquement associée au port multifonctions Uᵢ, vérifie si la catégorie CP identifié du périphérique P correspond bien à cette catégorie CPᵢ, et permet la connexion (i.e. le transfert de données entre le périphérique P et l'interface INT si le résultat de cette vérification est positif.

Dans un mode de réalisation avantageux, les moyens de gestion d'accès M_{acc} comprennent en outre un module de vérification M_{VERIF}, connecté entre les moyens de gestion d'accès M_{acc} et l'interface INT, et configuré pour effectuer une vérification sur les données transmises entre le port multifonctions Uᵢ et l'interface INT, donc entre le périphérique P quand il est connecté à ce port multifonctions Uᵢ et un système informatique connecté à l'interface INT.

Une telle vérification peut se faire par exemple en limitant ou modifiant à la volée les échanges entre le port multifonctions Uᵢ et l'interface INT, que ce soit au niveau des commandes bas niveau (type lecture de la mémoire à une adresse, frappe d'une touche, acquisition d'une valeur ou donnée, etc.) ou en vérifiant les données transportées respectent certaines contraintes, par exemple que les caractères transmis appartiennent bien à un alphabet donné, en vérifiant que les lignes de données répondent bien à certaines caractéristiques prédéfinies, en vérifiant une signature réalisée sur les données transmises, etc...

Cette vérification peut porter sur tous les paquets de données échangés entre le port multifonctions Uᵢ et l'interface INT, de façon plus ou moins évoluée, au moyen d'une liste blanche, d'un filtre à état, d'un filtre à mémoire (suivant les échanges précédent) ou d'une vérification sur la taille des paquets, ou une signature numérique par exemple.

En cas d'échec de cette vérification, dans un mode de réalisation, les données ne sont plus transmises entre le périphérique P et le système d'informations et l'accès au système d'informations est interrompu, ce qui permet d'offrir un niveau supplémentaire de contrôle d'accès. Dans un autre mode de réalisation, ces données sont modifiées à la volée pour être rendues inoffensives.

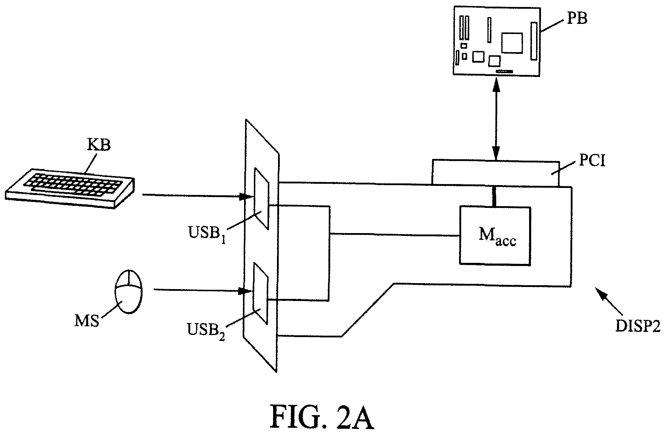

On se réfère maintenant à la **figure 2A** qui illustre un premier mode particulier de réalisation du dispositif de contrôle d'accès de la figure 1 ne comprenant que deux ports multifonctions.

Dans ce premier mode particulier de réalisation, le dispositif de contrôle d'accès DISP2 illustré prend la forme d'une carte PCI à installer dans un boîtier d'ordinateur personnel, avec une interface PCI servant à la connexion avec la carte-mère PB de l'ordinateur personnel.

Ce dispositif DISP2 comprend un premier port multifonctions USB₁, de type USB, et un deuxième port multifonctions USB₂, de type USB.

Les moyens de gestion d'accès M_{acc} du dispositif DISP2 sont alors configurés physiquement, comme indiqué précédemment, pour autoriser l'accès de l'interface PCI au moyen d'un périphérique KB, lorsqu'il est connecté au premier port multifonctions USB₁, seulement si ce périphérique KB appartient à une première catégorie CP₁ de périphériques associée spécifiquement et de façon permanente au premier port multifonctions USB₁, ici la catégorie des claviers d'ordinateur.

Les moyens de gestion d'accès M_{acc} du dispositif DISP2 sont également configurés physiquement pour autoriser l'accès de l'interface PCI au moyen d'un périphérique MS, lorsqu'il est connecté au deuxième port multifonctions USB₂, seulement si ce périphérique MS appartient à une deuxième catégorie CP₂ de périphériques associée spécifiquement et de façon permanente au deuxième port multifonctions USB₂ et distincte de la première CP₁ catégorie de périphériques, ici la catégorie des souris d'ordinateur.*

Dans ce mode de réalisation, les moyens d'accès M_{acc} consistent donc en un seul module de gestion d'accès commun aux deux ports multifonctions USB₁ et USB₂. Ainsi, lorsqu'un ordinateur personnel ne dispose que d'un tel dispositif DISP2 pour communiquer avec les utilisateurs, seuls des claviers de type USB sont acceptés sur le premier port USB₁ et seules des souris de type USB sont acceptées sur le deuxième port USB₂, ce qui empêche par exemple la connexion de clés USB pour récupérer des données sensibles ou de câbles réseau de type USB pour tenter de prendre le contrôleur de cet ordinateur personnel.

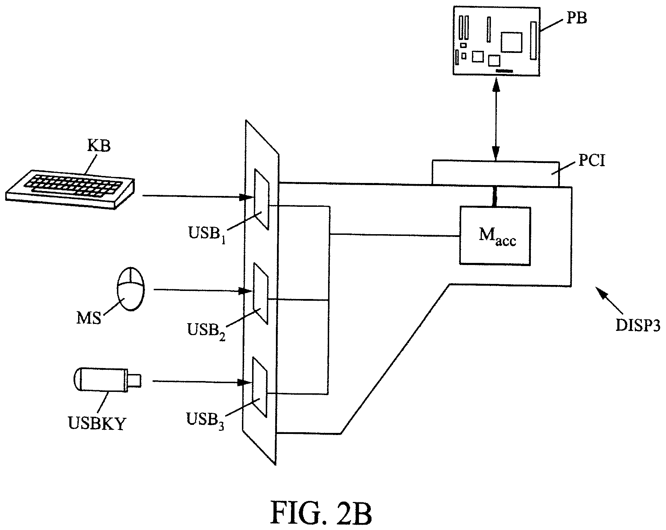

On se réfère maintenant à la **figure 2B** qui illustre un deuxième mode particulier de réalisation du dispositif de contrôle d'accès de la figure 1 ne comprenant que trois ports multifonctions.

Dans ce deuxième mode particulier de réalisation, le dispositif de contrôle d'accès DISP3 illustré prend toujours la forme d'une carte PCI à installer dans un boîtier d'ordinateur personnel, avec une interface PCI servant à la connexion avec la carte-mère PB de l'ordinateur personnel.

Ce dispositif DISP3 comprend un premier port multifonctions USB₁, un deuxième port multifonctions USB₂ et un troisième port multifonctions USB₃, tous de type USB.

Les moyens de gestion d'accès M_{acc} du dispositif DISP3 sont alors configurés physiquement, comme indiqué précédemment, pour autoriser l'accès de l'interface PCI au moyen d'un périphérique KB, lorsqu'il est connecté au premier port multifonctions USB₁, seulement si ce périphérique KB appartient à une première catégorie CP₁ de périphériques associée spécifiquement et de façon permanente au premier port multifonctions USB₁, ici la catégorie des claviers d'ordinateur.

Les moyens de gestion d'accès M_{acc} du dispositif DISP3 sont également configurés physiquement pour autoriser l'accès de l'interface PCI au moyen d'un périphérique MS, lorsqu'il est connecté au deuxième port multifonctions USB₂, seulement si ce périphérique MS appartient à une deuxième catégorie CP₂ de périphériques associée spécifiquement et de façon permanente au deuxième port multifonctions USB₂ et distincte de la première CP₁ catégorie de périphériques, ici la catégorie des souris d'ordinateur.

Les moyens de gestion d'accès M_{acc} du dispositif DISP3 sont enfin configurés physiquement pour autoriser l'accès de l'interface PCI au moyen d'un périphérique USBKY, lorsqu'il est connecté au troisième port multifonctions USB₃, seulement si ce périphérique USBKY appartient à une troisième catégorie CP₃ de périphériques associée spécifiquement et de façon permanente au troisième port multifonctions USB₃ et distincte des première et deuxième catégories de périphériques CP₁ et CP₂, ici la catégorie des clés de stockage USB.

Dans ce mode de réalisation, les moyens d'accès M_{acc} consistent donc en un seul module de gestion d'accès commun aux trois ports multifonctions USB₁, USB₂ et USB₃.

Ainsi, lorsqu'un ordinateur personnel ne dispose que d'un tel dispositif DISP3 pour communiquer avec les utilisateurs, seuls des claviers de type USB sont acceptés sur le premier port USB₁, seules des souris de type USB sont acceptées sur le deuxième port USB₂, et seules des clés de stockage USB sont acceptées sur le troisième port USB₃.

Ceci empêche par exemple la connexion de câbles réseau de type USB pour tenter de prendre le contrôle de cet ordinateur personnel, tout en permettant le stockage de données, option qui n'est pas offerte par le dispositif DISP2 illustré à la figure 2A.

Dans la mesure où la connexion de clé de stockage USB est possible avec le dispositif DISP3, un degré moindre de sécurisation physique est offert avec ce dispositif, et il peut alors être avantageux d'employer un module de vérification similaire au module M_{VERIF} décrit en relation avec la figure 1, afin d'effectuer un contrôle sur les données transmises entre l'interface PCI et une clé USBKY connecté au troisième port USB₃.

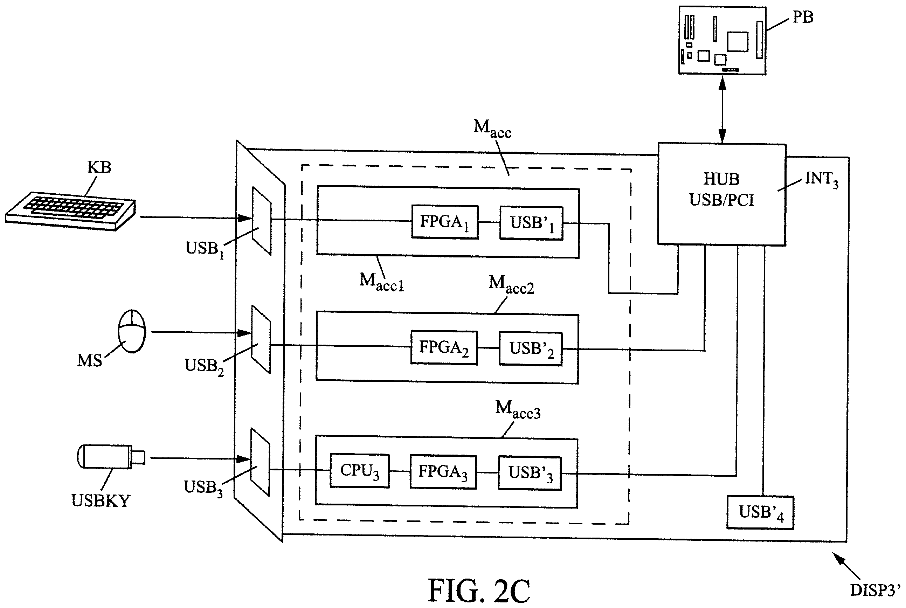

On se réfère maintenant à la **figure 2C** qui illustre un troisième mode particulier de réalisation du dispositif de contrôle d'accès de la figure 1 comprenant également trois ports multifonctions.

Dans ce troisième mode particulier de réalisation concernant un dispositif DISP3' comprenant une interface INT₃, un premier port multifonctions USB₁, de type USB, dédié à la connexion d'un périphérique KB de type clavier, un deuxième port multifonctions USB₂, de type USB, dédié à la connexion d'un périphérique MS de type souris et un troisième port multifonctions USB₃, de type USB, dédié à la connexion d'un périphérique USBKY de type clé de stockage, les moyens de gestion d'accès M_{acc} comprend un premier module de gestion d'accès M_{acc1} un deuxième module de gestion d'accès M_{acc2} et un troisième module de gestion d'accès M_{acc3} associés respectivement aux ports multifonctions USB₁, USB₂ et USB₃ et dédiés respectivement aux types de périphériques ci-avant.

En particulier, le premier module de gestion d'accès M_{acc1} comprend un module de traitement FPGA₁, connecté au port multifonctions USB₁ et configuré pour effectuer la gestion de l'accès ainsi que la vérification évoquées précédemment sur les données émanant d'un périphérique KB et transitant par ce port USB₁, ainsi qu'un port USB interne, désigné par USB'₁ et connecté au module de traitement FPGA₁. Les données émanant du périphérique KB et vérifiées dans ce premier module de gestion d'accès M_{acc1} sont ainsi disponibles en sortie de ce module sur le port USB interne USB'₁.

Ce module de traitement FPGA₁ est ainsi configuré physiquement, comme indiqué précédemment, pour autoriser l'accès de l'interface INT₃ au moyen d'un périphérique KB, lorsqu'il est connecté au premier port multifonctions USB₁, seulement si ce périphérique KB appartient à une première catégorie CP₁ de périphériques associée spécifiquement et de façon permanente au premier port multifonctions USB₁, ici la catégorie des claviers d'ordinateur.

Similairement, le deuxième module de gestion d'accès M_{acc2} comprend un module de traitement FPGA₂, connecté au port multifonctions USB₂ et configuré pour effectuer la vérification évoquée précédemment sur les données émanant d'un périphérique MS et transitant par ce port USB₂, ainsi qu'un port USB interne, désigné par USB'₂ et connecté au module de traitement FPGA₂. Les données émanant du périphérique MS et vérifiées dans ce deuxième module de gestion d'accès M_{acc2} sont ainsi disponibles en sortie de ce module sur le port USB interne USB'₂.

Ce module de traitement FPGA₂ est ainsi configuré physiquement, comme indiqué précédemment, pour autoriser l'accès de l'interface INT₃ au moyen d'un périphérique MS, lorsqu'il est connecté au deuxième port multifonctions USB₂, seulement si ce périphérique MS appartient à une deuxième catégorie CP₂ de périphériques associée spécifiquement et de façon permanente au deuxième port multifonctions USB₂, ici la catégorie des souris.

Enfin, le troisième module de gestion d'accès M_{acc3} comprend un premier module de traitement CPU₃ connecté au port multifonctions USB₃, un deuxième module de traitement FPGA₃ connecté au premier module de traitement CPU₃, ainsi qu'un port USB interne, désigné par USB'₃ et connecté au deuxième module de traitement FPGA₃.

Le deuxième module de traitement FPGA₃ est configuré physiquement, comme indiqué précédemment, pour autoriser l'accès de l'interface INT₃ au moyen d'un périphérique USBKY, lorsqu'il est connecté au troisième port multifonctions USB₃, seulement si ce périphérique USBKY appartient à une troisième catégorie CP₃ de périphériques associée spécifiquement et de façon permanente au troisième port multifonctions USB₃, ici la catégorie des périphériques de stockage comme par exemple les clés de stockage USB. Ce deuxième module de traitement FPGA₃ est ainsi configuré pour effectuer la fonction d'identification de la catégorie du périphérique connecté au port multifonctions USB₃ et fait donc office de module d'identification M_{id} au sens de qui est décrit précédemment.

Le premier module de traitement CPU₃ est, quant à lui, configuré pour effectuer la vérification de données échangées par le biais du port USB₃ de la façon évoquée précédemment. Ce premier module de traitement CPU₃ fait donc office de module de vérification M_{VERIF} au sens de qui est décrit précédemment.

Ainsi, lorsqu'un ordinateur personnel ne dispose que d'un tel dispositif DISP3' pour communiquer avec les utilisateurs, seuls des claviers de type USB sont acceptés sur le premier port USB₁, seules des souris de type USB sont acceptées sur le deuxième port USB₂, et seules des clés de stockage USB sont acceptées sur le troisième port USB₃.

Ici, à la différence du deuxième mode de réalisation, le dispositif DISP3' comprend une interface INT₃ comprenant elle-même un module hub USB, connecté aux ports internes USB₁, USB₂ et USB₃ afin de gérer les échanges de données entre ces différentes interfaces. L'interface INT₃ comprend également une interface PCI pour permettre la connexion du dispositif DISP3' sur une carte-mère PB et les échanges de données entre cette carte-mère et les ports multifonctions.

L'utilisation d'une interface INT₃ avec un module hub USB permet d'optimiser les échanges internes de données entre les différents modules de gestion d'accès et le système informatique auquel est connecté le dispositif DISP3'.

Le hub USB de l'interface INT₃ peut être connecté en outre avec une autre interface USB interne USB'₄, permettant l'échange de données non filtré avec le système informatique dans lequel est installé le dispositif DISP3'.

Dans le dispositif DISP3', la vérification n'est effectuée que sur les données échangées avec un périphérique de stockage connecté au port USB₃, et non sur les données reçues des ports USB₁ et USB₂, ce qui permet d'optimiser l'agencement interne du dispositif et d'éviter des vérifications inutiles.

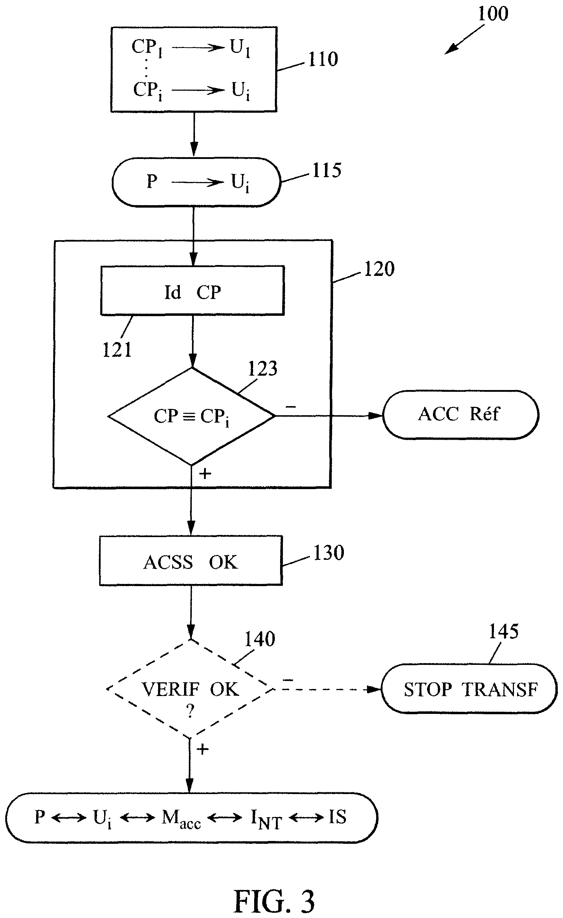

On se réfère enfin à la **figure 3** qui illustre les étapes d'un procédé d'accès contrôlé à un système informatique selon la présente invention.

Un tel procédé 100 d'accès contrôlé utilise un dispositif de contrôle d'accès DISP, tel que décrit en relation avec la figure 1, comprenant un certain nombre de ports multifonctions U₁,...,Uᵢ servant à la connexion de périphériques distincts, une interface d'accès INT servant à la connexion au système informatique considéré et des moyens de gestion d'accès M_{acc}, connectés entre les ports multifonctions U₁,...,Uᵢ et l'interface d'accès INT, gérant la connexion entre les ports multifonctions U₁,...,Uᵢ et l'interface d'accès INT.

Le procédé 100 d'accès contrôlé peut commencer par une étape préalable 110 d'association physique permanente d'une catégorie spécifique de périphériques CP₁,...,CPᵢ respectivement à chacun desdits au moins un port multifonctions U₁,...,Uᵢ du dispositif DISP, ces différentes catégories spécifiques de périphériques CP₁,...,CPᵢ étant distinctes les unes des autres.

Comme indiqué précédemment, cette association physique permanente peut être réalisée en programmant les moyens de gestion d'accès M_{acc} sous la forme d'un circuit programmable, de type FPGA, qui ne peut plus être modifié après programmation de ce circuit.

Ceci permet de figer physiquement les différentes catégories spécifiques de périphériques CP₁,...,CPᵢ associées respectivement aux ports multifonctions U₁,...,Uᵢ et donc d'empêcher un utilisateur malveillant de modifier une telle association, ce qui peut être le cas avec une implémentation non-physique de type logicielle.

Suite à la connexion d'un périphérique P sur l'un des ports multifonctions Uᵢ (étape 115 de connexion), le procédé 100 comprend la vérification (étape 120) du fait que le périphérique P appartienne bien à la catégorie CPᵢ de périphériques associée spécifiquement et de façon permanente au port multifonctions Uᵢ auquel ce périphérique P est connecté.

Si tel est bien le cas, et seulement dans ce cas, l'accès est autorisé (étape d'autorisation 130) par les moyens d'accès M_{acc}, pour ce périphérique P, à l'interface INT du dispositif DISP, et donc au système informatique auquel cette interface INT est connectée. L'étape 130 d'autorisation d'accès peut alors comprendre le transfert de données entre le périphérique P et le système informatique IS en question, via le port multifonctions Uᵢ, les moyens de gestion d'accès M_{acc} et l'interface d'accès INT du dispositif DISP.

Sinon, c'est-à-dire lorsque le périphérique P n'appartient pas à la catégorie CPᵢ de périphériques associée spécifiquement et de façon permanente au port multifonctions Uᵢ auquel ce périphérique P est connecté, l'accès du périphérique P à l'interface INT du dispositif DISP est refusé et bloqué par les moyens d'accès M_{acc} du dispositif DISP.

Dans un mode de réalisation particulier, le procédé 100 comprend, après la connexion du périphérique P au port multifonctions Uᵢ, l'identification (étape 121) de la catégorie CP de ce périphérique P par le dispositif DISP (plus particulièrement par un module d'identification M_{id} compris dans ses moyens d'accès M_{acc}), l'accès à l'interface d'accès INT étant alors autorisé en fonction de la comparaison de la catégorie CP identifiée et de la catégorie CPᵢ de périphériques associée spécifiquement et de façon permanente au port multifonctions Uᵢ (étape 123 de comparaison).

Si la catégorie CP identifiée correspond à la catégorie CPᵢ de périphériques associée spécifiquement et de façon permanente au port multifonctions Uᵢ, et seulement dans ce cas, l'accès du périphérique P à l'interface INT du dispositif DISP, et donc au système informatique auquel cette interface INT est connectée, est autorisé par les moyens d'accès M_{acc} (étape d'autorisation 130).

Si, par contre, la catégorie CP identifiée ne correspond pas à la catégorie CPᵢ de périphériques associée spécifiquement et de façon permanente au port multifonctions Uᵢ, l'accès du périphérique P à l'interface INT du dispositif DISP est refusé et bloqué par les moyens d'accès M_{acc} du dispositif DISP.

Dans un mode de réalisation avantageux, le procédé 100 d'accès contrôlé comprend en outre la vérification (étape 140) des données transmises, après l'étape 130 d'autorisation d'accès, entre le port multifonctions Uᵢ auquel le périphérique est connecté et l'interface INT du dispositif DISP connecté au système informatique IS.

Cette vérification peut être faite par un module de vérification M_{verif} tel que décrit précédemment et peut comprendre, par exemple, la vérification du fait que les caractères transmis appartiennent bien à un alphabet donnée, que les lignes de données répondent bien à certaines caractéristiques prédéfinies, ou la vérification d'une signature effectuée sur les données transmises, etc.

Si le résultat de cette vérification est positif, le périphérique P peut communiquer et échanger des données avec un système informatique connecté à l'interface INT via le port multifonctions Uᵢ, les moyens d'accès M_{acc} et l'interface d'accès INT du dispositif DISP.

Si le résultat de cette vérification est négatif, le transfert de données entre le périphérique P et l'interface d'accès INT du dispositif DISP est interrompu par les moyens de gestion d'accès M_{acc} (étape 145 d'interruption de transfert de données).

La présente invention vise en outre un programme d'ordinateur comportant des instructions de code pour la mise en oeuvre du procédé de contrôle d'accès décrit précédemment lorsque ce programme est exécuté par le processeur d'un dispositif de contrôle d'accès, par exemple par le processeur PROC situé dans les module d'identification M_{id} du dispositif DISP décrit à la figure 1.

Un tel programme peut utiliser n'importe quel langage de programmation, et être sous la forme d'un code source, code objet, ou de code intermédiaire entre code source et code objet, tel que dans une forme partiellement compilée, ou dans n'importe quelle autre forme souhaitable.

La présente invention vise aussi un support d'informations lisible par un ordinateur ou un processeur de données, et comportant des instructions de code du programme mentionné ci-dessus. Ce support d'informations peut être n'importe quelle entité ou dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur. Ce support d'informations peut également comporter de la mémoire type FLASH, pour le stockage du programme et l'enregistrement des informations réceptionnées par un module client, et de la mémoire de type RAM pour la sauvegarde des données temporaires telles les listes serveurs et thèmes associés.

D'autre part, ce support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention, qui est défini par les revendications suivantes.

## Revendications

1. Dispositif de contrôle d'accès à un système informatique, le dispositif comprenant au moins un port multifonctions apte à être connecté à différentes catégories de périphériques et une interface d'accès apte à être connectée au système informatique, le dispositif comprenant des moyens de gestion d'accès connectés, par le biais d'un contrôleur, entre le port multifonctions et l'interface, et configurés physiquement pour autoriser un accès de l'interface au moyen d'un périphérique connecté au port multifonctions seulement si ledit périphérique appartient à une catégorie de périphériques associée spécifiquement et de façon permanente au port multifonctions auquel il est connecté, le dispositif étant **caractérisé en ce que**:
les moyens de gestion d'accès comprennent un module d'identification permettant d'identifier une catégorie du périphérique connecté au port multifonctions en interceptant des données de description d'appareil échangées sur le contrôleur lors d'une connexion de ce périphérique.

2. Dispositif selon la revendication 1, **caractérisé en ce qu'**il comprend un premier et un deuxième ports multifonctions et **en ce que** les moyens de gestion d'accès sont configurés physiquement pour autoriser l'accès de l'interface au moyen d'un périphérique connecté au premier port multifonctions seulement si ledit périphérique appartient à une première catégorie de périphériques associée spécifiquement et de façon permanente au premier port multifonctions et pour autoriser l'accès de l'interface au moyen d'un périphérique connecté au deuxième port multifonctions seulement si ledit périphérique appartient à une deuxième catégorie de périphériques associée spécifiquement et de façon permanente au deuxième port multifonctions et distincte de la première catégorie de périphériques.

3. Dispositif selon la revendication 2, **caractérisé en ce qu'**il comprend en outre un troisième port multifonctions et **en ce que** les moyens de gestion d'accès sont configurés physiquement pour autoriser l'accès de l'interface au moyen d'un périphérique connecté au troisième port multifonctions seulement si ledit périphérique appartient à une troisième catégorie de périphériques associée spécifiquement et de façon permanente au troisième port multifonctions et distincte des première et deuxième catégories de périphériques.

4. Dispositif selon la revendication 3, **caractérisé en ce que** les moyens de gestion d'accès comprennent un premier module d'accès, un deuxième module d'accès et un troisième module d'accès connectés respectivement au premier port multifonctions, au deuxième port multifonctions et au troisième port multifonctions, et **en ce que** l'interface d'accès comprend un module hub connecté auxdits premier, deuxième et troisième module d'accès.

5. Dispositif selon l'une des revendications 1 à 4, **caractérisé en ce que** les moyens de gestion d'accès comprennent des moyens de mémorisation mémorisant la catégorie de périphériques associée spécifiquement et de façon permanente audit port multifonctions.

6. Dispositif selon l'une quelconque des revendications 1 à 5, **caractérisé en ce que** les moyens de gestion d'accès comprennent en outre un module de vérification, connecté entre les moyens de gestion d'accès et l'interface, configuré pour effectuer une vérification sur les données transmises entre le port multifonctions et l'interface.

7. Dispositif selon l'une des revendications 1 à 6, **caractérisé en ce que** les moyens de gestion d'accès comportent des circuits programmables une unique fois.

8. Dispositif selon l'une quelconque des revendications 1 à 7, **caractérisé en ce qu'**une première, une deuxième et/ou une troisième catégorie de périphériques correspondent à une catégorie de périphériques parmi les claviers, les souris et les clés de stockage.

9. Dispositif selon l'une quelconque des revendications 1 à 8, **caractérisé en ce que** au moins un port multifonctions est un port universel de type USB.

10. Procédé de contrôle d'accès d'un périphérique à un système informatique par l'intermédiaire d'un dispositif de contrôle d'accès comprenant un port multifonctions auquel est connecté le périphérique et une interface à laquelle est connecté le système informatique, le procédé comprenant :
- identification d'une catégorie associée au périphérique connecté au port multifonctions, un accès à l'interface étant autorisé seulement si la catégorie identifiée correspond à une catégorie de périphériques spécifiquement associée au port multifonctions auquel le périphérique est connecté ; et
- autorisation d'accès, pour le périphérique, à l'interface connectée au système informatique seulement si ledit périphérique appartient à une catégorie de périphériques associée spécifiquement et de façon permanente au port multifonctions auquel ledit périphérique est connecté, le procédé étant **caractérisé en ce que** :
l'identification de la catégorie est basée sur l'interception des données de description d'appareil échangées sur le contrôleur lors d'une connexion de ce périphérique.

11. Procédé selon la revendication 10, **caractérisé par** la vérification des données transmises, après l'autorisation d'accès, entre le port multifonctions auquel le périphérique est connecté et l'interface du dispositif connectée au système informatique.

12. Procédé selon l'une quelconque des revendications 10 ou 11, **caractérisé par** une étape préalable d'association physique permanente d'une catégorie spécifique de périphériques respectivement à chacun desdits au moins un port multifonctions du dispositif, lesdites catégories spécifiques de périphériques étant distinctes les unes des autres.

13. Programme d'ordinateur comportant des instructions de code pour la mise en oeuvre du procédé de contrôle d'accès selon l'une des revendications 10 à 12, lorsque ce programme est exécuté par le processeur d'un dispositif de contrôle d'accès connectant un périphérique à un système informatique.

## Patentansprüche

1. Vorrichtung zur Kontrolle des Zugriffs auf ein Computersystem, wobei die Vorrichtung mindestens einen Multifunktionsanschluss, der geeignet ist, an verschiedene Kategorien von Peripheriegeräten angeschlossen zu werden, und eine Zugriffsschnittstelle, die geeignet ist, an das Computersystem angeschlossen zu werden, wobei die Vorrichtung Mittel zur Steuerung des Zugriffs umfasst, die über einen Kontroller zwischen dem Multifunktionsanschluss und der Schnittstelle angeschlossen und physisch dazu vorgesehen sind, einen Zugriff der Schnittstelle mit Hilfe eines Peripheriegeräts, das an den Multifunktionsanschluss angeschlossen ist, nur dann zu gestatten, wenn das Peripheriegerät einer Kategorie von Peripheriegeräten angehört, die spezifisch und permanent dem Multifunktionsanschluss, an den es angeschlossen ist, zugeordnet ist, wobei die Vorrichtung **dadurch gekennzeichnet ist, dass** die Mittel zur Steuerung des Zugriffs ein Identifikationsmodul umfassen, das es ermöglicht, eine Kategorie des Peripheriegeräts zu identifizieren, das an den Multifunktionsanschluss angeschlossen ist, wobei Gerätebeschreibungsdaten, die auf dem Kontroller bei einem Anschluss dieses Peripheriegeräts ausgetauscht werden, abgefangen werden.

2. Vorrichtung nach Anspruch 1, **dadurch gekennzeichnet, dass** sie einen ersten und einen zweiten Multifunktionsanschluss umfasst, und dass die Mittel zur Steuerung des Zugriffs physisch derart konfiguriert sind, dass sie den Zugriff der Schnittstelle mit Hilfe eines Peripheriegeräts, das an den ersten Multifunktionsanschluss angeschlossen ist, nur dann gestatten, wenn das Peripheriegerät einer ersten Kategorie von Peripheriegeräten angehört, die spezifisch und permanent dem ersten Multifunktionsanschluss zugeordnet ist, und dass sie den Zugriff der Schnittstelle mit Hilfe eines Peripheriegeräts, das an den zweiten Multifunktionsanschluss angeschlossen ist, nur dann gestatten, wenn das Peripheriegerät einer zweiten Kategorie von Peripheriegeräten angehört, die spezifisch und permanent dem zweiten Multifunktionsanschluss zugeordnet ist und sich von der ersten Kategorie von Peripheriegeräten unterscheidet.

3. Vorrichtung nach Anspruch 2, **dadurch gekennzeichnet, dass** sie ferner einen dritten Multifunktionsanschluss umfasst, und dass die Mittel zur Steuerung des Zugriffs physisch derart konfiguriert sind, dass sie den Zugriff der Schnittstelle mit Hilfe eines Peripheriegeräts, das an den dritten Multifunktionsanschluss angeschlossen ist, nur dann gestatten, wenn das Peripheriegerät einer dritten Kategorie von Peripheriegeräten angehört, die spezifisch und permanent dem dritten Multifunktionsanschluss zugeordnet ist und sich von der ersten und zweiten Kategorie von Peripheriegeräten unterscheidet.

4. Vorrichtung nach Anspruch 3, **dadurch gekennzeichnet, dass** die Mittel zur Steuerung des Zugriffs ein erstes Zugriffsmodul, ein zweites Zugriffsmodul und ein drittes Zugriffsmodul umfassen, die an den ersten Multifunktionsanschluss, den zweiten Multifunktionsanschluss bzw. den dritten Multifunktionsanschluss angeschlossen sind, und dass die Zugriffsschnittstelle ein Hub-Modul umfasst, das an das erste, zweite und dritte Zugriffsmodul angeschlossen ist.

5. Vorrichtung nach einem der Ansprüche 1 bis 4, **dadurch gekennzeichnet, dass** die Mittel zur Steuerung des Zugriffs Speichermittel umfassen, die die Kategorie von Peripheriegeräten, die spezifisch und permanent dem Multifunktionsanschluss zugeordnet ist, speichern.

6. Vorrichtung nach einem der Ansprüche 1 bis 5, **dadurch gekennzeichnet, dass** die Mittel zur Steuerung des Zugriffs ferner ein Überprüfungsmodul umfassen, das zwischen den Mitteln zur Steuerung des Zugriffs und der Schnittstelle angeschlossen und dazu vorgesehen ist, eine Überprüfung an den zwischen dem Multifunktionsanschluss und der Schnittstelle übertragenen Daten durchzuführen.

7. Vorrichtung nach einem der Ansprüche 1 bis 6, **dadurch gekennzeichnet, dass** die Mittel zur Steuerung des Zugriffs ein einziges Mal programmierbare Schaltungen umfassen.

8. Vorrichtung nach einem der Ansprüche 1 bis 7, **dadurch gekennzeichnet, dass** eine erste, eine zweite und/oder eine dritte Kategorie von Peripheriegeräten einer Kategorie von Peripheriegeräten unter Tastatur, Maus und Speicherschlüssel entsprechen.

9. Vorrichtung nach einem der Ansprüche 1 bis 8, **dadurch gekennzeichnet, dass** mindestens ein Multifunktionsanschluss ein Universalanschluss vom Typ USB ist.

10. Verfahren zur Kontrolle des Zugriffs eines Peripheriegeräts auf ein Computersystem mit Hilfe einer Vorrichtung zur Zugriffskontrolle, umfassend einen Multifunktionsanschluss, an den das Peripheriegerät angeschlossen ist, und eine Schnittstelle, an die das Computersystem angeschlossen ist, wobei das Verfahren umfasst:
- Identifikation einer Kategorie, die dem Peripheriegerät zugeordnet ist, das an den Multifunktionsanschluss angeschlossen ist, wobei ein Zugriff auf die Schnittstelle nur dann gestattet wird, wenn die identifizierte Kategorie einer Kategorie von Peripheriegeräten entspricht, die spezifisch dem Multifunktionsanschluss zugeordnet ist, an den das Peripheriegerät angeschlossen ist; und
- Autorisierung eines Zugriffs durch das Peripheriegerät auf die Schnittstelle, die an das Computersystem angeschlossen ist, nur dann, wenn das Peripheriegerät einer Kategorie von Peripheriegeräten angehört, die spezifisch und permanent dem Multifunktionsanschluss zugeordnet ist, an den das Peripheriegerät angeschlossen ist, wobei das Verfahren **dadurch gekennzeichnet ist, dass** die Identifikation der Kategorie auf dem Abfangen der Gerätebeschreibungsdaten, die auf dem Kontroller bei einem Anschluss dieses Peripheriegeräts ausgetauscht werden, basiert.

11. Verfahren nach Anspruch 10, **gekennzeichnet durch** die Überprüfung der übertragenen Daten nach Autorisierung eines Zugriffs zwischen dem Multifunktionsanschluss, an den das Peripheriegerät angeschlossen ist, und der Schnittstelle der Vorrichtung, die an das Computersystem angeschlossen ist.

12. Verfahren nach einem der Ansprüche 10 oder 11, **gekennzeichnet durch** einen vorherigen Schritt der permanenten physischen Zuordnung einer spezifischen Kategorie von Peripheriegeräten jeweils jedem des mindestens einen Multifunktionsanschlusses der Vorrichtung, wobei die spezifischen Kategorien von Peripheriegeräten zueinander unterschiedlich sind.

13. Computerprogramm, umfassend Codebefehle für den Einsatz des Verfahrens zur Zugriffskontrolle nach einem der Ansprüche 10 bis 12, wenn dieses Programm vom Prozessor einer Vorrichtung zur Zugriffskontrolle ausgeführt wird, der ein Peripheriegerät an ein Computersystem anschließt.

## Claims

1. Device for controlling access to a computer system, the device comprising at least one multifunctional port capable of being connected to different categories of peripherals and an access interface capable of being connected to the computer system, the device comprising access management means connected, by means of a controller, between the multifunctional port and the interface, and physically configured to authorize access to the interface by means of a peripheral connected to the multifunctional port only if said peripheral belongs to a category of peripherals specifically and permanently associated with the multifunctional port to which it is connected,
wherein the controlling device is **characterized in that**:
the access management means comprise an identification module configured to identify a category of the peripheral connected to the multifunctional port by intercepting device descriptor data exchanged over the controller when said peripheral is connected.

2. Device according to claim 1, **characterized in that** the device comprises a first and a second multifunctional ports, and **in that** the access management means are physically configured to authorize access to the interface by means of a peripheral connected to the first multifunctional port only if said peripheral belongs to a first category of peripherals specifically and permanently associated with the first multifunctional port and to authorize access to the interface by means of a peripheral connected to the second multifunctional port only if said peripheral belongs to a second category of peripherals specifically and permanently associated with the second multifunctional port and different from the first category of peripherals.

3. Device according to claim 2, **characterized in that** the device comprises further a third multifunctional port and **in that** the access management means are physically configured to authorize access to the interface by means of a peripheral connected to the third multifunctional port only if said peripheral belongs to a third category of peripherals specifically and permanently associated with the third multifunctional port and different from the first and second categories of peripherals.

4. Device according to claim 3, **characterized in that** the access management means comprise a first access module, a second access module and a third access module connected respectively to the first multifunctional port, the second multifunctional port and the third multifunctional port, and **in that** the access interface comprises a hub module connected to said first, second and third access modules.

5. Device according to one of claims 1 to 4, **characterized in that** the access management means comprise storage means storing the category of peripherals specifically and permanently associated with said multifunctional port.

6. Device according to one of claims 1 to 5, **characterized in that** the access management means comprise moreover a verification module, connected between the access management means and the interface, configured to carry out verification on the data transmitted between the multifunctional port and the interface.

7. Device according to one of claims 1 to 6, **characterized in that** the access management means comprise one-time programmable circuits.

8. Device according to one of claims 1 to 7, **characterized in that** a first, a second and/or a third category of peripherals correspond to a category of peripherals among keyboards, mice and storage keys.

9. Device according to one of claims 1 to 8, **characterized in that** the at least one multifunctional port is a universal port of USB type.

10. Method of controlling access of a peripheral to a computer system via an access control device comprising a multifunctional port to which the peripheral is connected and an interface to which the computer system is connected, the method comprising:
- identifying a category associated to the peripheral connected to the multifunctional port, an access to the interface being authorized only if the category identified corresponds to a category of peripherals specifically associated to the multifunctional port to which the peripheral is connected; and
- authorizing an access, for the peripheral, to the interface connected to the computer system only if said peripheral belongs to a category of peripherals specifically and permanently associated with the multifunctional port to which said peripheral is connected,
the controlling method being **characterized in that**:
identifying the category is based on intercepting device descriptor data exchanged over the controller when said peripheral is connected.

11. Method according to claim 10, **characterized by** verifying the transmitted data, after the access authorization, between the multifunctional port to which the peripheral is connected and the interface of the device connected to the computer system.

12. Method according to one of claims 10 or 11, **characterized by** a prior step of permanent physical association of a specific category of peripherals respectively with each of said at least one multifunctional port of the device, said specific categories of peripherals being different from each other.

13. Computer program comprising code instructions for implementing the access control method according to one of claims 10 to 12, when this program is executed by the processor of an access control device connecting a peripheral to a computer system.
